# EUROPÄISCHE PATENTSCHRIFT

(11) **EP 1 320 248 B1**
(45) Veröffentlichungstag und Bekanntmachung des Hinweises auf die Patenterteilung: **17.08.2005**
(21) Anmeldenummer: 01129747.0
(22) Anmeldetag: 13.12.2001
(51) Int. Cl.: H04M 15/00

(54) **Verfahren zur ortsabhängigen Vergebührung mobiler Kommunikation**
Method for location based billing in mobile communications
Procéde de facturation des communications mobiles en fonction du lieu

(43) Veröffentlichungstag der Anmeldung: 18.06.2003
(73) Patentinhaber: SIEMENS AKTIENGESELLSCHAFT, 80333 München (DE)
(72) Erfinder: Offer, Gero, 71116 Gärtingen (DE)

(56) Entgegenhaltungen:
- EP-A- 0 073 144
- EP-A- 0 597 638
- WO-A-93/03585
- WO-A-99/56326
- DE-C- 19 731 461
- DE-C- 19 731 463
- US-A- 5 568 153
- US-A- 5 594 777
- US-A- 5 670 950
- US-A- 6 018 652
- US-A- 6 023 618

## Beschreibung

Die Erfindung betrifft ein Verfahren zur ortsabhängigen Vergebührung mobiler Telekommunikation nach dem Oberbegriff des Anspruchs 1.

In den letzten Jahren hat die mobile Telekommunikation, insbesondere das mobile Telefonieren sowohl im privaten Alltag der Nutzer als auch im Rahmen des Managements unternehmerischer oder organisatorischer Aufgaben, einen erheblichen Stellenwert erlangt. Dies ist insbesondere durch die wachsende Mobilität der Nutzer dieses Kommunikationsverfahrens und auch durch die zunehmende Flexibilisierung und Mobilisierung betrieblicher Prozesse bedingt. Unternehmen, die früher fest an einem Standort lokalisiert waren und damit innerbetriebliche Abläufe und Verwaltungsaufgaben durch ein ortsgebundenes Festnetz organisieren konnten, verfügen zunehmend über einen im Servicebereich und damit im Außendienst tätigen Mitarbeiterstab, der mobil ist und somit auch mobil erreichbar sein muß.

Die mobile Telekommunikation kommt hier zur Anwendung. Sie weist aber gegenüber dem bereits gebräuchlichen innerbetrieblichen oder innerorganisatorischen Festnetz einige gravierende Nachteile auf.

Der erste Nachteil betrifft den gegenüber dem herkömmlichen innerbetrieblichen und standortgebundenen Festnetz erhöhten Vermittlungsaufwand mobiler Kommunikationsverbindungen. Während bei einem Festnetz, welches in einem Unternehmens- oder Organisationsbereich lokalisiert ist, alle Gespräche oder sonstigen Kommunikationen zwischen Teilnehmern über im wesentlichen eine vorzugsweise innerhalb des Betriebes gelegene Vermittlungsstelle abgewickelt werden und somit ein einfacher Überblick über die innerhalb des lokalen Festnetzes registrierten Teilnehmer gegeben ist, ist dies bei einem mobilen Telekommunikationsnetz nicht der Fall. Bei diesem erfolgen alle Einbuchungs- und Kommunikationsvorgänge über einen im Allgemeinen nicht innerhalb des Betriebes lokalisierten Netzserver, der auch Verbindungen zwischen Mobilstationen herstellen muß, die zu Teilnehmern gehören, die nicht zu einer Unternehmens- oder Organisationsstruktur gehören. Zudem läßt sich mit einem mobilen Telekommunikationsnetz nach dem gegenwärtigen Stand der Technik weit weniger gut ein geografisch lokaler Standortbereich eines Unternehmens oder einer sonstigen Organisation abdecken.

Der Vorteil der Mobilität wird somit durch den Nachteil einer ungenauen Standortabdeckung erreicht.

Aber auch die mobile Telekommunikation, beispielsweise im Au-ßendienst eines Unternehmens, kann bisher nicht in der Weise betriebsintern abgewickelt werden, wie dies bei unternehmensinternen Festnetzen der Fall ist, da es bislang keine Möglichkeit gibt, reine betriebsinterne Kommunikation gegenüber dem Netzserver als solche zu kennzeichnen. Als Ausweg verbleibt daher bislang entweder die unternehmensseitige Anschaffung gewisser Kontingente von Mobilstationen (im wesentlichen Handys), deren einzelne rufnummernabhängige Registrierung auf Seiten des Netzservers und des Unternehmens oder eine mobile Kommunikation über die privaten Mobilstationen der im Unternehmen tätigen Mitarbeiter. Beide derzeitigen Lösungen bringen einen enormen Zuwachs an Verwaltungsaufgaben entweder auf Seiten des Netzservers oder des Unternehmens oder beiden zugleich mit sich.

Zur Lokalisierung mobiler Telekommunikation auf einen geografisch eindeutig bestimmten Unternehmensbereich bestehen nach dem derzeitigen Stand der Technik schon bekannte Lösungsansätze. In einem ersten, bereits und in der Druckschrift DE 198 08 499 veröffentlichten Verfahren registrierten Verfahren wird eine lokationsabhängige Vergebührung beschrieben.

Dabei werden mehrere durch den Netzserver verwaltete Funkzellen logisch zu einem Heimatbereich zusammengefaßt und bei einer Lokalisierung einer Mobilstation eines Teilnehmers eine vorvereinbarte Vergebührung für Kommunikationen entweder innerhalb dieses Heimatbereiches oder aus diesem Heimatbereich hinaus angewendet.

Bei einem anderen, ebenfalls bei der Firma Siemens unter dem Aktenzeichen DE 197 31 461 registrierten Verfahren kommt eine teilnehmerindividuelle Zusammenfassung von Funkzellen zu Tarif-Zonen, wie Office-Zonen, City-Zonen oder Home-Zonen zur Anwendung, die auf einem Vergleich der momentanen Lokalisierung des betreffenden Teilnehmers in einer Funkzelle mit einer auf Seiten des Netzservers verwalteten vordefinierten, zu den erwähnten Tarif-Zonen zusammengefaßten Funkzellen beruht. Befindet sich der Teilnehmer mit seiner Mobilstation innerhalb des von ihm mit dem Netzserver vereinbarten Zonenbereichs, kommt eine gesonderte Vergebührung zur Anwendung.

Eine weitere Druckschrift US 6,023,618 beschreibt in einem Mobilfunknetz das zusätzliche Merkmal der Sondervergebührung, wenn sich beide Teilnehmer (Anrufer und Angerufener) in einer Sondergebührenzone aufhalten.
Eine Beschreibung dieses Vorgangs erläutert die Überprüfung beim Einbuchen des Endgerätes in der Zone, wie dies beim Verbindungsaufbau geschieht. Sie geht nicht auf ein mögliches Roaming zwischen Funkzellen während der Verbindung ein, jedoch kann auch dieses Roaming als Einbuchen in einer neuen Funkzelle verstanden werden. Weiterhin wird in der kompletten Beschreibung darauf hingewiesen, dass der Aufenthalt in der ausgezeichneten Funkzelle des Teilnehmers für die Vergebührung entscheidend ist.

Die aus dem Stand der Technik bekannten Verfahren lösen jedoch nicht das eigentliche Problem.

Es besteht die Aufgabe, ein Verfahren für eine ortsabhängige Vergebührung einer Gesamtheit von Mobilstationen eines mobilen Telekommunikationsnetzes anzugeben, wobei die Mobilität der Teilnehmer, insbesondere im Falle eines Ortswechsels des Teilnehmers, so zu berücksichtigen ist, dass deren Mobilstationen mit möglichst einfachen Mitteln dieser Gesamtheit unabhängig von deren konkretem Aufenthaltsort seitens des Netzservers zuordenbar sind. Dabei wird kein teilnehmerindividuelles Verfahren gesucht, sondern eines, welches das betriebs- oder organisationsabhängige Festnetz vollkommen auf der Basis mobiler Telekommunikation ersetzt und der betriebsinternen Kommunikation den durch das mobile Telekommunikationsnetz gegebenen wesentlichen Vorteil der Mobilität aller Teilnehmer hinzufügt.

Die Lösung der genannten Aufgaben geschieht mit einem Verfahren nach Patentanspruch 1, wobei die darauf folgenden Unteransprüche mindestens zweckmäßige Ausgestaltungen des Hauptanspruches beinhalten.

Erfindungsgemäß erfolgt eine einer gesonderten Sondergebührenzone zugeordnete Vergebührung der Kommunikation zwischen zwei Mobilstationen, sobald eine gleichzeitige Einbuchung beider Mobilstationen innerhalb der Sondergebührenzone seitens des Netzservers festgestellt ist.

Die geographische Sondergebührenzone wird durch ein zwischen beide Teilnehmer beinhaltendes Unternehmen oder eine vergleichbare Organisation mit einem Netzserver vorab vereinbart. Die Bildung der Sondergebührenzone erfolgt in an sich bekannter Weise durch die logische Vereinigung innerhalb eines Netzservers von bereits bestehenden Funkzellen. Sondergebührenzone ist ein zwischen Unternehmen/Organisation einerseits und Netzserver andererseits vorab vereinbarter Vergebührungstarif zugeordnet. Die Vereinbarung der Sondergebührenzone erfolgt erfindungsgemäß nicht für jede Mobilstation einzeln, sondern geschlossen für eine Gesamtheit von Mobilstationen von mobilen Teilnehmern, beispielsweise für an einem bestimmten Standort beschäftigte Mitarbeiter eines Unternehmens. Der geographisch der Sondergebührenzone zugeordnete Unternehmens- oder Organisationsbereich muß nicht zusammenhängend sein, sondern kann auch eine Reihe räumlich getrennter Standorte umfassen.

Alle Kommunikationsvorgänge, die zwischen in der Sondergebührenzone lokalisierten Mobilstationen ablaufen, werden seitens des Netzservers nach einem der Sondergebührenzone zugeordneten lokal gültigen Tarif vergebührt.

Von Seiten des Netzservers erfolgt eine fortlaufende Prüfung auf einen Aufenthalt einer Mobilstation eines Teilnehmers innerhalb der Sondergebührenzone. Hierzu wird die momentane Zellkennung der Mobilstation eines Teilnehmers mit einem durch den Netzservers verwalteten Zonenregister verglichen. Das Zonenregister enthält alle die Sondergebührenzone definierenden Funkzellen. Wird eine Mobilstation eines Teilnehmers seitens des Netzservers in einer Funkzelle lokalisiert, die innerhalb des Zonenregisters aufgeführt ist, wird die betreffende Mobilstation als innerhalb der Sondergebührenzone lokalisiert betrachtet.

Sowohl bei Einbuchung einer Mobilstation innerhalb der Sondergebührenzone, als auch bei einer Verbindungsaufnahme mit einer anderen Mobilstation, die ebenfalls innerhalb der Sondergebührenzone lokalisiert ist, erhält mindestens eine Mobilstation durch den Netzserver eine Bestätigung über Lokalisierung innerhalb der Sondergebührenzone. Damit erhält der betreffende Teilnehmer die Information, daß die von ihm über dessen Mobilstation abgewickelte Kommunikation der gesonderten Vergebührung unterliegt. Zugleich dient dies als äußeres Kennzeichen für den Teilnehmer dafür, daß momentan eine unternehmensinterne Kommunikation stattfindet.

Diese Bestätigung kann sowohl optisch als auch akustisch oder kombiniert auf den Mobilstationen der betreffenden Teilnehmer angezeigt werden. Eine optische Bestätigung kann insbesondere durch das Übermitteln einer Kurznachricht oder eines Zeichens durch den Netzserver auf einem Display der Mobilstation erfolgen. Akustisch kann die Bestätigung beispielsweise durch einen besonders gestalteten Rufton auf der Mobilstation realisiert sein.

Da die kommunizierenden Teilnehmer mit deren Mobilstationen innerhalb eines mobilen Telekommunikationsnetzes nicht ortsfest sind, kommt es vor, daß Teilnehmer im Rahmen der Mobilität die Sondergebührenzone verlassen. Geschieht dies, so wird die Mobilstation des betreffenden Teilnehmers seitens des Netzservers in einer Funkzelle lokalisiert, die nicht im Zonenregister aufgeführt ist. In diesem Fall wird von Seiten des Netzservers die Übermittlung eines Hinweises oder einer Warnung an die jeweilige Mobilstation initiiert. Verläßt während einer bestehenden Kommunikation eine der beiden Mobilstationen die Sondergebührenzone, kann ein Hinweis und/oder eine Warnung an beide kommunizierenden Mobilstationen durch den Netzserver übermittelt werden.

Insbesondere kommen als für den Teilnehmer kennzeichnend für die Übermittlung des Hinweises und/oder der Warnung optische Signale, beispielsweise auf das Display der jeweiligen Mobilstation, die Übermittlung einer Kurznachricht oder einer in eine bestehende Kommunikation eingeblendete Sprachnachricht zur Anwendung.

Mit dem Verlassen der Sondergebührenzone durch einen der beiden momentan kommunizierenden Teilnehmer kann die gesonderte Vergebührung entfallen und der normale Tarif auf die weiter bestehende Kommunikation angewendet werden.

Als vorteilhafte Ausgestaltung ist es möglich, die gesonderte Vergebührung so lange aufrecht zu erhalten, bis die Kommunikation zwischen den Mobilstationen abgeschlossen ist. Dies ist insbesondere dann zweckmäßig, wenn die Sondergebührenzone ein geographisch ungünstiges Gelände überdeckt. Da die zur Sondergebührenzone zusammengefaßten Funkzellen im Allgemeinen nicht vollkommen kongruent zum real vorliegenden geographischen Gebiet sind und zum Teil über dieses hinaus reichen können, ist es zweckmäßig, die Menge der seitens des Netzservers logisch zur Sondergebührenzone zusammen gefaßten Funkzellen vorzugsweise kleiner als das reale geographisch vorliegende Gebiet zu wählen.

Wird nun die Sondergebührenzone während einer bestehenden Kommunikation verlassen, befindet sich aber der die Sondergebührenzone verlassende Teilnehmer mit der ihm zugeordneten Mobilstation noch im real der Sondergebührenzone geographisch zugeordneten Bereich, ist durch die weiter bestehende gesonderte Vergebührung gewährleistet, daß die Kongruenz zwischen gesonderter Vergebührungszone und entsprechendem geographischen Bereich in gewissen Grenzen flexibel gestaltet werden kann, während durch außerhalb des geographischen Bereichs lokalisierte Mobilstationen nicht unerwünscht Teil der Sondergebührenzone sind.

Als weitere Ausgestaltung des erfindungsgemäßen Verfahrens ist vorgesehen, bei einer Einbuchung der Mobilstation innerhalb der Sondergebührenzone eine Zonenkennung über die Einbuchung der betreffenden Mobilstation innerhalb der Sondergebührenzone mobilstationsseitig zu speichern. Die Mobilstation erhält auf diese Weise eine eindeutige Zuordnung über eine Zugehörigkeit zur Sondergebührenzone, die insbesondere einen erneuten Einbuchungs- und Lokalisierungsvorgang seitens des Netzservers vereinfacht.

Bei einer erneuten Einbuchung wird die Zonenkennung von der Mobilstation an den Netzserver übermittelt oder von diesem aus der Mobilstation abgefragt. Damit wird eine Zuordnung der betreffenden Mobilstation zur Sondergebührenzone möglich, da die Zonenkennung unabhängig von der tatsächlichen Lokalisierung der Mobilstation eine eindeutige und rufnummernunabhängige Zuordnung zur dieser ermöglicht. Ein Teilnehmer, der sich nicht ständig innerhalb der vorwiegend geographisch definierten Sondergebührenzone aufhält, erhält die Möglichkeit, zum gesonderten Vergebührungstarif mobil zu kommunizieren.

Damit werden die Möglichkeiten mobiler Kommunikation mit einer eindeutigen Zuordnung der betreffenden Mobilstation bzw. des betreffenden Teilnehmers zu einem Unternehmen und/oder einer sonstigen Organisation kombiniert, die vor allem ohne eine Rufnummernabhängigkeit realisiert werden kann.

Die Zonenkennung kann je nach den bestehenden Erfordernissen in ihrer Gültigkeit beschränkt sein. So kann diese durchgängig und zeitlich unbegrenzt gültig sein, eine durchgängige, aber zeitlich begrenzte Gültigkeit aufweisen oder eine zeitlich unbegrenzte aber nicht durchgängige Gültigkeit besitzen. So ist es beispielsweise möglich, daß mobile Mitarbeiter eines Unternehmens während ihrer Arbeitszeit mit ihrer persönlichen Mobilstation mit anderen Mitarbeitern des gleichen Unternehmens dienstlich kommunizieren können, während nach Abschluß ihrer nominellen Arbeitszeit für alle weiteren privaten Gespräche, der übliche Tarif des mobilen Telekommunikationsnetzes gültig ist.

Bei einer weiteren Ausgestaltung des erfindungsgemäßen Verfahrens kann die Zonenkennung auch innerhalb der Mobilstationen fest vorgegeben sein, ohne daß ein initialisierender Einbuchungsvorgang erfolgt. In diesem Fall hat das betreffende Unternehmen und/oder die betreffende Organisation eine deutlichere Kontrolle über die Teilnehmer, die nach dem gesondert vereinbarten Tarif, der der Sondergebührenzone zugeordnet ist, kommunizieren, indem das betreffende Unternehmen entweder entsprechende Mobilstationen zur Verfügung stellt oder entsprechende Speichereinrichtungen innerhalb der Mobilstation modifizieren läßt.

Als besonders zweckmäßig erweist es sich deshalb, die Zonenkennung auf dem Teilnehmeridentifikationsmodul, der SIM, zu speichern. Über eine Ausgabe spezieller SIM-Karten, die dazu eingerichtet sind, die Zonenkennung zu speichern, ist es möglich, eine genaue Kontrolle über die in der Nutzung befindlichen Mobilstationen zu erhalten.

Das erfindungsgemäße Verfahren soll anhand von Anwendungsbeispielen näher erläutert werden. Zur Verdeutlichung dienen die beigefügten Abbildungen Fig. 1 bis Fig. 4. Es werden für gleiche bzw. gleichartige Verfahrensschritte bzw. -aspekte die selben Bezugszeichen verwendet. Im Einzelnen zeigen:
Fig. 1 einen schematischen Überblick über das erfindungsgemäße Vergebührungsverfahren einer Kommunikation zweischen Mobilstationen MS-A und MS-B zweier Teilnehmer A und B,
Fig. 2 einen LEAVE-Prozeß eines Teilnehmers B mit dessen Mobilstation MS-B,
Fig. 3 einen Registrierungsvorgang einer Mobilstation MS und
Fig. 4 eine Vergebührung einer Kommunikation zwischen durch Zellkennungen ZK registrierten Mobilstationen MS zweier Teilnehmer A und B.

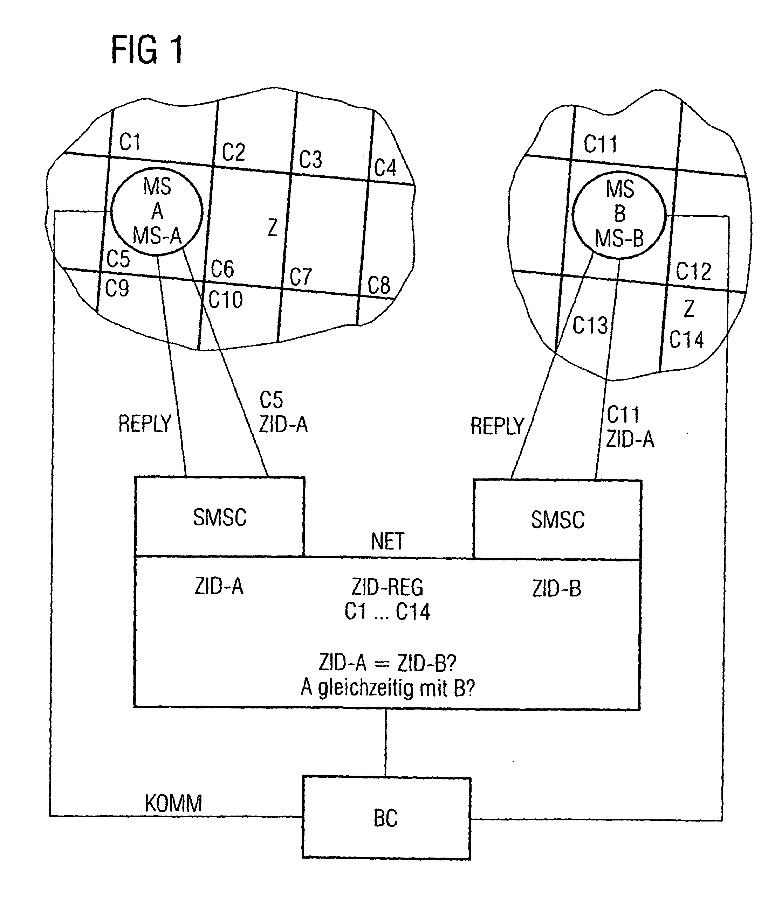

Fig. 1 zeigt einen allgemeinen Überblick über eine Ausführung das erfindungsgemäßen Vergebührungsverfahrens. Mindestens zwei mit Mobilstationen MS-A und MS-B ausgestattete Teilnehmer A und B befinden sich innerhalb einer vordefinierten und durch A und B mit einem Netzserver NET vereinbarten Sondergebührenzone Z. Diese umfaßt vom Netzserver NET durch Empfangs- und Sendeeinrichtungen definierte und an diese gekoppelte Zellen C, welche in Fig. 1 beispielhaft durch C1 ... C14 bezeichnet sind. Durch die Zusammenfassung entsprechender Zellen C überdeckt die vereinbarte Sondergebührenzone Z einen geographisch definierten Bereich, der beispielsweise einem Territorium von Unternehmensstandorten zugeordnet sein kann, in dem beide Teilnehmer A und B beschäftigt sind. Aus diesem Grund kann die Sondergebührenzone Z so ausgestaltet sein, daß sie ein geographisch nicht zusammenhängendes Gebiet umfaßt.

Die kommunizierenden Teilnehmer A und B sind mit Mobilstationen MS ausgestattet, die in an sich bekannter Weise ausgeführt sind. Dies können sowohl Mobiltelefone nach dem bekannten Stand der Technik, als auch sonstige Einrichtungen sein, die für eine mobile Datenübertragung geeignet sind.

Die Mobilstationen MS sind in der bekannten Weise in das mobile Kommunikationsnetz des Netzservers NET eingebucht. Der Netzserver NET verwaltet intern ein Zonenregister ZID-REG, welches einen Katalog aller vorvereinbarten Zellen C1 ... C14 umfaßt, die der Sondergebührenzone Z zugeordnet sind. Während des Einbuchungsvorgangs erfolgt in einer an sich bekannten Weise eine Lokalisierung der Mobilstationen MS-A und MS-B der Teilnehmer A und B und eine Überprüfung ihres Aufenthaltes innerhalb der gesonderten Vergebührungszone Z durch Vergleich ihrer Zellenidentifikation mit dem vom Netzserver NET verwalteten Zonenregister ZID-REG.

Stellt der Netzserver NET einen Aufenthalt der jeweils eingebuchten Mobilstation MS innerhalb der Sondergebührenzone Z fest, erfolgt eine Rückmeldung REPLY des Netzservers NET an die Mobilstation MS eines jeweiligen Teilnehmers mit einer Bestätigung seines Aufenthaltes innerhalb der Sondergebührenzone Z. Zweckmäßigerweise kann die Rückmeldung REPLY durch den entsprechenden Kurznachrichtendienst SMSC des Netzservers NET erfolgen. Auf den Mobilstationen MS der entsprechenden Teilnehmer kann die Rückmeldung REPLY beispielsweise durch ein akustisches oder ein optisches Signal ausgegeben werden.

Wird durch einen der Teilnehmer A oder B eine Kommunikation KOMM initiiert und werden A und B innerhalb Z lokalisiert, erfolgt eine gesonderte, mit dem Netzserver NET vereinbarte Vergebührung der Kommunikation KOMM zwischen den Mobilstationen MS der Teilnehmer A und B.

Das alleinige Kriterium einer gesonderten Vergebührung einer mobilen Kommunikation zwischen dem Mobilstationen der Teilnehmer A und B ist deren durch den Netzserver NET identifizierte Lokalisierung innerhalb der Sondergebührenzone Z. Somit ist der gesondert mit dem Netzserver NET vereinbarte Vergebührungstarif für jeden Teilnehmer A und B nutzbar, der sich innerhalb der Sondergebührenzone Z aufhält, sofern dessen momentane Zelle CA als auch die Zelle CB seines Kommunikationspartners innerhalb des Zonenregisters ZID-REG aufgeführt ist. Umfaßt die Zone Z beispielsweise das Territorium eines Unternehmens oder einer Großveranstaltung, wird eine gesonderte Vergebührung nach einem Zonentarif der Vergebührungseinrichtung BC für jede Kommunikation KOMM zwischen Mobilstationen MS wirksam, die sich innerhalb des Unternehmens oder der Großveranstaltung befinden. Dies betrifft insbesondere Firmenfremde bzw. alle Besucher und Teilnehmer an einer Großveranstaltung.

Eine weitere vorteilhafte Ausgestaltung des erfindungsgemäßen Vergebührungsverfahrens berücksichtigt die Mobilität der Teilnehmer A und B, sowie die mangelnde Deckungsgleichheit zwischen der Sondergebührenzone Z und dem geographischen Bereich, den diese umfaßt.

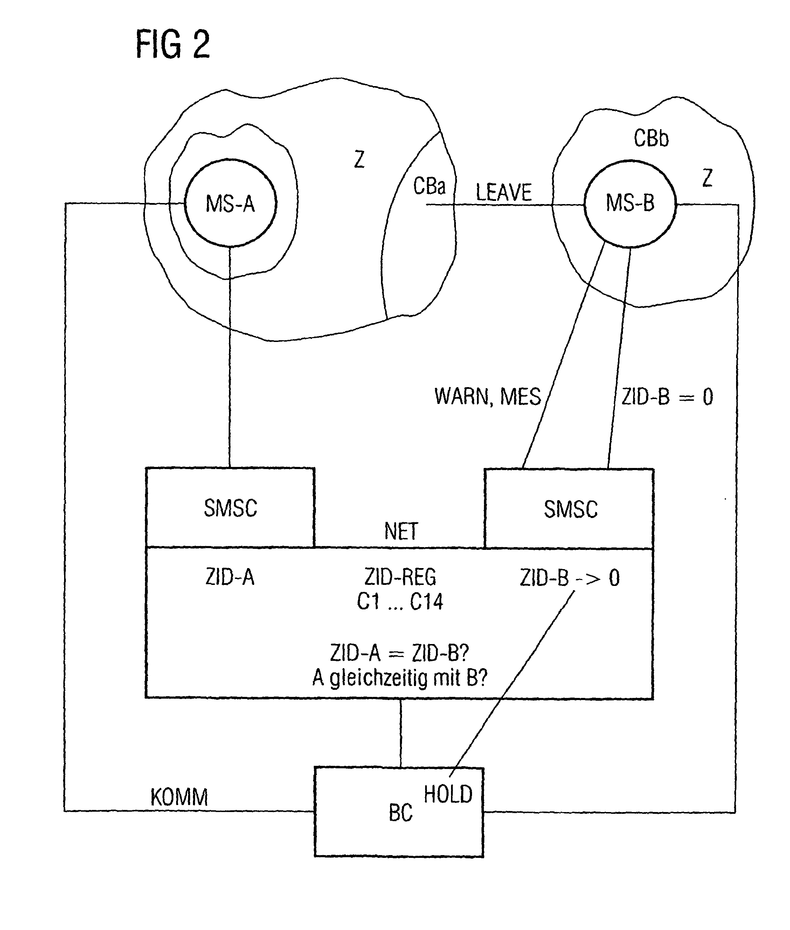

Diese vorteilhafte Ausgestaltung wird in Fig. 2 näher erläutert. Gemäß der schematischen Darstellung in Fig. 2 ist ein Teilnehmer A innerhalb der Sondergebührenzone Z lokalisiert, während sich Teilnehmer B innerhalb der Sondergebührenzone Z eingebucht hat und während einer Kommunikation mit A die Sondergebührenzone Z durch einen in Fig. 2 mit LEAVE bezeichneten Vorgang verläßt. Bei diesem Vorgang wechselt Teilnehmer B aus einer zunächst innerhalb einer der Sondergebührenzone Z zugeordneten Zelle Cba in eine Zelle CBb über, die nicht innerhalb des Zonenregisters ZID-REG des Netzservers NET aufgeführt ist. Damit ist Teilnehmer B nicht mehr innerhalb Z lokalisiert und dessen Zonenlokalisation ZID-B erlischt. Wird dies durch den Netzserver NET festgestellt, erfolgt entweder eine Warnung WARN an die Mobilstation MS des Teilnehmers B, welche ein optisches und/oder akustisches Signal an entsprechenden Einrichtungen der Mobilstation MS auslöst. Alternativ dazu kann eine Sprachmitteilung MES zusätzlich in die momentan geführte Kommunikation KOMM an die Mobilstation MS eingeblendet werden, die Teilnehmer B auf das Verlassen der Sondergebührenzone Z hinweist und ihm somit eine Rückkehr nach Z empfiehlt.

Die weitere Kommunikation kann dann unter Wegfall der gesondert vereinbarten Vergebührung zu einem üblichen Tarif fortgesetzt werden.

Alternativ dazu ist es jedoch auch möglich, in Verbindung mit dem durch den Netzserver NET festgestellten LEAVE-Vorgang an die Vergebührungseinrichtung BC ein HOLD-Signal zu übermitteln. Durch Übermittlung von HOLD kann die Vergebührungseinrichtung BC angewiesen werden, die gesonderte, an die Sondergebührenzone Z gebundene Vergebührung bis zum Beenden des Kommunikationsvorganges KOMM aufrecht zu erhalten.

Diese Ausgestaltung des erfindungsgemäßen Vergebührungsverfahrens berücksichtigt die Mobilität der Teilnehmer A und B, aber auch ungenaue Kongruenzen zwischen der Zellenstruktur des mobilen Kommunikationsnetzes und der realen Umgrenzung eines geographischen Territoriums. Mit Hilfe der HOLD-Funktion ist es möglich, einen Kernbereich eines geographischen Gebietes einer Zellenstruktur zuzuordnen, der sicher innerhalb dieses Gebietes gelegen ist, während auch ein begrenztes Überschreiten und Verlassen des definierten Zonengebietes Z während einer mobilen Kommunikation noch möglich ist. Diese Ausgestaltung ist besonders dann sehr vorteilhaft, wenn der reale geographische Bereich mittels einer Zellenstruktur nur schwer oder ungenau durch eine Sondergebührenzone Z einzugrenzen ist.

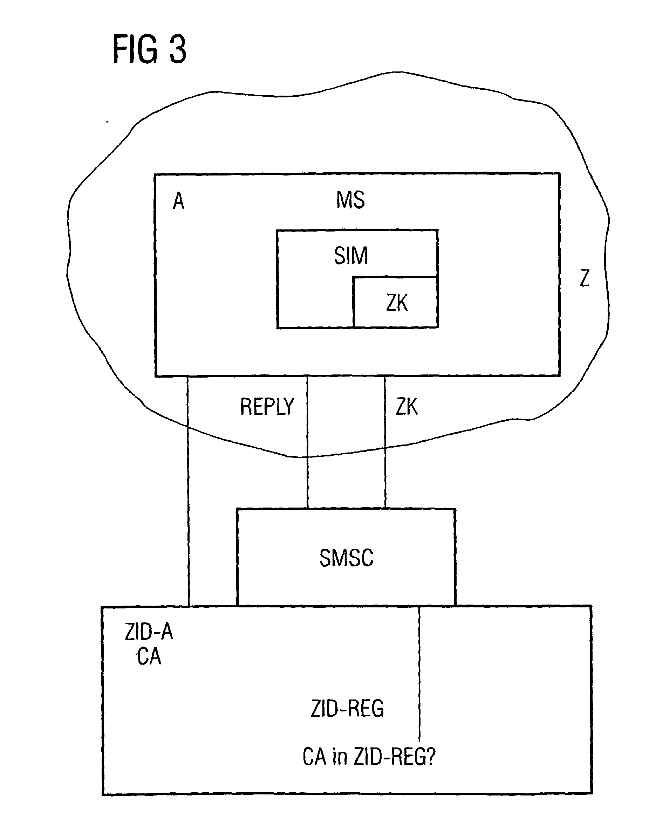

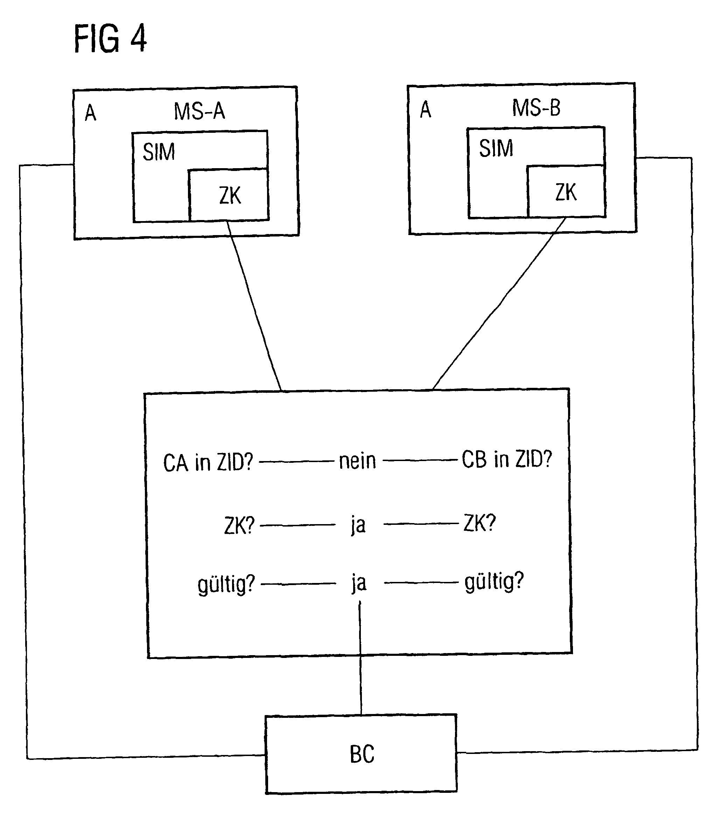

Bei einer weiteren Ausgestaltung des erfindungsgemäßen Vergebührungsverfahrens ist eine mobile Zonenzuordnung der jeweiligen Teilnehmer in Verbindung mit einem Einbuchungs- und Registrierungsvorgang vorgesehen. Dies ist in Fig. 3 und Fig. 4 näher erläutert.

Die kommunizierenden Teilnehmer A und B sind grundsätzlich mobil und können ihren Aufenthaltsort frei wählen. Zudem können sie nicht nur durch eine geographische Zusammenfassung, sondern auch durch logistische Abläufe, eine Organisationszugehörigkeit oder dergleichen weitere Zuordnungen mehr einer gesonderten Vergebührungszone Z zugeordnet sein. In diesem Fall tritt eine "mobile" Zonenzugehörigkeit in den Vordergrund, die durch folgende Ausgestaltungen des erfindungsgemäßen Verfahrens berücksichtigt wird.

Fig. 3 zeigt einen modifizierten Einbuchungsvorgang einer Mobilstation MS eines Teilnehmers A innerhalb einer vordefinierten gesonderten Vergebührungszone Z. Der Netzserver NET registriert die Lokalisierung der Mobilstation MS des Teilnehmers A innerhalb einer Zelle CA und führt eine Überprüfung durch, ob CA innerhalb des Zonenregisters ZID-REG enthalten ist. Ist das der Fall, wird eine Übermittlung einer Bestätigung REPLY an die Mobilstation MS des Teilnehmers A veranlaßt.

Zusätzlich dazu wird eine Zonenkennung ZK an die Mobilstation MS übermittelt, die mobilstationsseitig abgespeichert wird. Zweckmäßigerweise kann dies innerhalb des Teilnehmeridentifikationsmoduls SIM der Mobilstation erfolgen. Bei einer erneuten Einbuchung der Mobilstation wird die Zonenkennung ZK an den Netzserver NET übermittelt und dient als Kennzeichen für eine Zuordnung der Mobilstation MS zur gesonderten Vergebührungszone Z unabhängig davon, ob die betreffende Mobilstation momentan tatsächlich geographisch innerhalb der Zone Z lokalisiert ist. Die Erstübermittlung der Zonenkennung ZK vom Netzserver NET an die Mobilstation MS stellt somit einen Initialisierungsvorgang dar.

Mehrere Varianten sind für die Verarbeitung der Zonenkennung ZK zwischen der Mobilstation MS und dem Netzserver NET entweder einzeln oder in Kombination vorgesehen.

Bei einer ersten Variante kann die Zonenkennung ZK nur eine begrenzte zeitliche Gültigkeitsdauer aufweisen und/oder nur zweitlich begrenzt von NET vergeben und/oder akzeptiert werden.

Bei einer zweiten Variante ist die Zonenkennung ZK so ausgeführt, daß diese nur in speziellen SIM-Ausführungen speicherbar ist. Über eine gezielte Vergabe speziell ausgeführter SIM-Module ist eine Vorabinitialisierung der Mobilstationen MS ohne Rufnummernvergabe oder -verwaltung möglich.

Bei einer dritten Variante kann die Zonenkennung auch fest in eine SIM bereits einprogrammiert sein.

Mit der Vergabe einer Zonenkennung ZK als Zonenidentifikation der Mobilstationen MS der Teilnehmer A und B, ist die Vergebührung nicht mehr an geographisch festgelegte Gebiete gebunden. Dagegen wird zusätzlich eine Zugehörigkeitskennung zu einer logistischen oder sonstigen insbesondere mobilen Organisationsstruktur möglich. Dies ist beispielsweise für mobile Strukturen, etwa einem Mitarbeiterkreis im Außendienst, Konferenzreisende oder dergleichen weitere mobile Bestandteile eines Unternehmens von Vorteil.

In Fig. 4 ist eine Kommunikation KOMM zwischen mit einer Zonenkennung ZK versehenen Mobilstationen MS zweier Teilnehmer A und B schematisch dargestellt. Beide Mobilstationen MS der Teilnehmer A und B können ihre jeweiligen Zonenkennungen ZK als Folge eines bereits dargestellten Initialisierungsvorganges oder bereits fest in die SIM einprogrammiert beinhalten.

Bei den Einbuchungsvorgangen der jeweiligen Mobilstationen MS werden die Zonenkennungen ZK aus den jeweiligen Mobilstationen MS an den Netzserver NET übermittelt. Der Netzserver NET nimmt eine Lokalisierung der jeweiligen Mobilstationen MS vor und überprüft die Gültigkeit der Zonenkennungen ZK von A und B. Wird durch einen der Teilnehmer A oder B ein Anruf zu einem jeweils anderen Teilnehmer getätigt, so wird bei Vorliegen einer Zonenkennung ZK beider Teilnehmer eine Vergebührung durch den Netzserver NET nach einem der gesonderten Vergebührungszone Z zugeordneten Tarif veranlaßt, unabhängig davon, ob A oder B tatsächlich innerhalb der vordefinierten Zone Z lokalisiert sind.

Damit wird eine organisationsabhängige Vergebührung mobiler Kommunikationsprozesse zwischen beiden Teilnehmern A und B als Ausgestaltung einer zonenabhängigen Vergebührung möglich. Zusammen mit der bereits erwähnten zeitlich beschränkten Gültigkeit der Zonenkennung ZK ist es möglich, beispielsweise während einer vordefinierten Arbeitszeit eine Mobilstation MS zu beruflichen Zwecken zu nutzen und sie ansonsten den Teilnehmern A und B zur privaten Nutzung zu überlassen.

## Patentansprüche

1. Verfahren zur ortsabhängigen Vergebührung mobiler Telekommunikation, umfassend:
- Zusammenfassung einer Teilmenge von Basisstationen (BSS) eines zellularen
Mobilfunknetzes zugeordneten und ein geographisches Gebiet überdeckenden organisatorisch zusammenhängender Funkzellen (C) zu einer Sondergebührenzone (Z),
- Einbuchungen von Mobilstationen (MS, MS-A, MS-B) in ein durch Basisstationen (BSS) aufgebautes zellulares Mobilfunknetz, Aufnahme, Übermittlung und Weiterleitung von Informationen,
wobei eine Vergebührung der Kommunikationen zwischen gleichzeitig innerhalb der Sondergebührenzone (Z) lokalisierten Mobilstationen (MS) durch eine einem Netzserver (NET) zugeordnete Vergebührungseinrichtung (BC) nach einem für die Sondergebührenzone (Z) lokal gültigen Tarif erfolgt **dadurch gekennzeichnet, dass** bei einer Einbuchung einer Mobilstation (MS) innerhalb der Sondergebührenzone (Z) eine Zonenkennung (ZK) als Nachweis über diesen Einbuchungsvorgang auf Seiten der Mobilstation (MS) gespeichert wird und
die auf Seiten der Mobilstation (MS) gespeicherte Zonenkennung (ZK) bei einer erneuten Einbuchung der Mobilstation (MS) durch den Netzserver (NET) von der Mobilstation (MS) abgefragt oder von der Mobilstation (MS) an den Netzserver (NET) übermittelt wird und
eine Kommunikation (KOMM) zwischen mindestens zwei Mobilstationen (MS-A, MS-B) nach dem der Sondergebührenzone (Z) zugeordneten Tarif unabhängig von deren momentaner Lokalisierung erfolgt, sofern mindestens eine der kommunizierenden Mobilstationen (MS) eine Zonenkennung (ZK) an den Netzserver (NET) übermittelt hat.

2. Verfahren nach Anspruch 1,
**dadurch gekennzeichnet, dass**
eine Prüfung auf eine Lokalisierung der Mobilstationen (MS) innerhalb der Sondergebührenzone (Z) durch einen Vergleich der momentanen Zellkennungen (CA, CB, ...) der Mobilstationen (MS) mit einem durch den Netzserver (NET) verwaltetes und die Sondergebührenzone (Z) durch eine Übersicht von Zellkennungen (C1 ... C14) definierendes Zonenregister (ZID-REG) erfolgt.

3. Verfahren nach Anspruch 2,
**dadurch gekennzeichnet, dass**
bei einer festgestellten Lokalisierung einer Mobilstation (MS-A) bei einer von dieser aus initiierten Verbindungsaufnahme über das mobile Kommunikationsnetz mit einer weiteren, innerhalb der Sondergebührenzone (Z) lokalisierten Mobilstation (MS-B) eine deren Anwesenheit innerhalb der gesonderten Vergebührungszone (Z) anzeigende Bestätigung (REPLY) seitens des Netzservers (NET) erfolgt.

4. Verfahren nach Anspruch 3,
**dadurch gekennzeichnet, dass**
die Bestätigung (REPLY) optisch und/oder akustisch auf mindestens einer der Mobilstationen (MS-A, MS-B) angezeigt wird.

5. Verfahren nach einem der vorhergehenden Ansprüche,
**dadurch gekennzeichnet, dass**
ein Hinweis (MES) und/oder eine Warnung (WARN) auf ein Verlassen (LEAVE) der gesonderten Sondergebührenzone (Z) durch eine Mobilstation (MS) eines Teilnehmer einer momentan bestehenden Kommunikation (KOMM) mittels eines optischen und/oder akustischen Signals und/oder einer schriftlichen und/oder einer Sprachnachricht an mindestens eine der kommunizierenden Mobilstationen (MS-A) bzw. (MS-B) erfolgt.

6. Verfahren nach einem der vorhergehenden Ansprüche,
**dadurch gekennzeichnet, dass**
bei einem Verlassen (LEAVE) der Sondergebührenzone (Z) während einer bestehenden Kommunikation (KOMM) zwischen den Mobilstationen (MS-A, MS-B) der der Sondergebührenzone (Z) zugeordnete Tarif mindestens bis zur Beendigung der Kommunikation (KOMM) von der Vergebührungseinrichtung (BC) aufrecht erhalten (HOLD) wird.

7. Verfahren nach einem der vorherigen Ansprüche
**dadurch gekennzeichnet, dass**
die Zonenkennung (ZK) mit einer zeitbegrenzten und/oder periodischen Gültigkeit versehen ist.

8. Verfahren nach einem der vorherigen Ansprüche
**dadurch gekennzeichnet, dass**
die Zonenkennung (ZK) seitens der Mobilstation (MS) ohne Initialisierung durch einen Einbuchungsvorgang fest vorgegeben ist.

9. Verfahren nach einem der vorherigen Ansprüche,
**dadurch gekennzeichnet, dass**
die Zonenkennung (ZK) auf einem dafür geeigneten Teilnehmeridentifikationsmodul (SIM) auf Seiten der Mobilstation (MS) gespeichert ist.

## Claims

1. Method for location-based billing for mobile telecommunication, involving:
- a subset of organizationally cohesive radio cells (C) which are associated with base stations (BSS) in a cellular mobile radio network and cover a geographical area being combined to form a special billing zone (Z),
- mobile stations (MS, MS-A, MS-B) registering in a cellular mobile radio network formed by base stations (BSS), and information, being recorded, transmitted and forwarded, where
billing for the communication between mobile stations (MS) localized within the special billing zone (Z) at the same time is effected by a billing facility (BC) associated with a network server (NET) on the basis of a locally valid tariff for the special billing zone (Z), **characterized in that**,
when a mobile station (MS) registers within the special billing zone (Z), a zone identifier (ZK) is stored by the mobile station (MS) as evidence of this registration procedure and when the mobile station (MS) registers again, the zone identifier (ZK) stored by the mobile station (MS) is requested from the mobile station (MS) by the network server (NET) or is transmitted from the mobile station (MS) to the network server (NET) and communication (KOMM) between at least two mobile stations (MS-A, MS-B) on the basis of the tariff associated with the special billing zone (Z) is effected irrespective of said mobile stations' current localization, provided that at least one of the communicating mobile stations (MS) has transmitted a zone identifier (ZK) to the network server (NET).

2. Method according to Claim 1,
**characterized in that**
localization of the mobile stations (MS) within the special billing zone (Z) is checked by comparing the current cell identifiers (CA, CB, ...) for the mobile stations (MS) with a zone register (ZID-REG) which is managed by the network server (NET) and defines the special billing zone (Z) by means of an overview of cell identifiers (C1 ... C14).

3. Method according to Claim 2,
**characterized in that**,
when the localization of a mobile station (MS-A) has been established, connection setup, initiated from this mobile station, over the mobile communication network to a further mobile station (MS-B) localized within the special billing zone (Z) involves the network server (NET) sending a confirmation (REPLY) which indicates the presence of said further mobile station within the separate billing zone (Z).

4. Method according to Claim 3,
**characterized in that**
the confirmation (REPLY) is indicated visually and/or audibly on at least one of the mobile stations (MS-A, MS-B).

5. Method according to one of the preceding claims,
**characterized in that**
a notification (MES) and/or warning (WARN) that the separate special billing zone (Z) is being left (LEAVE) by a mobile station (MS) belonging to a subscriber involved in currently existing communication (KOMM) is sent by means of a visual and/or audible signal and/or a text and/or voice message to at least one of the communicating mobile stations (MS-A) and (MS-B).

6. Method according to one of the preceding claims,
**characterized in that**,
if the special billing zone (Z) is left (LEAVE) during ongoing communication (KOMM) between the mobile stations (MS-A, MS-B), the tariff associated with the special billing zone (Z) is maintained (HOLD) by the billing facility (BC) at least until the communication (KOMM) has ended.

7. Method according to one of the preceding claims,
**characterized in that**
the zone identifier (ZK) is provided with a validity which has a time limit and/or is periodic.

8. Method according to one of the preceding claims,
**characterized in that**
the zone identifier (ZK) is firmly prescribed by the mobile station (MS) without initialization by a registration procedure.

9. Method according to one of the preceding claims,
**characterized in that**
the zone identifier (ZK) is stored by the mobile station (MS) on a subscriber identification module (SIM) which is suitable for this purpose.

## Revendications

1. Procédé pour la taxation dépendante du lieu de communications mobiles comprenant :
- un regroupement de cellules radio (C) cohérentes au niveau de l'organisation, attribuées à une quantité partielle de stations de base (BSS) d'un réseau cellulaire de téléphonie mobile et recouvrant un secteur géographique, en une zone de taxation spéciale (Z),
- enregistrements de stations mobiles (MS, MS-A, MS-B) dans un réseau cellulaire de téléphonie mobile mis en place par des stations de base (BSS), intégration, transmission d'informations, une taxation des communications entre des stations mobiles (MS) localisées simultanément à l'intérieur de la zone de taxation spéciale (Z) étant effectuée par un dispositif de taxation (BC) attribué à un serveur de réseau (NET) selon un tarif valable localement pour la zone de taxation spéciale (Z), **caractérisé en ce que**, lors d'un enregistrement d'une station mobile (MS) à l'intérieur de la zone de taxation spéciale (Z), un code de zone (ZK) est mémorisé comme preuve de cette opération d'enregistrement du côté de la station mobile (MS) et
le code de zone (ZK) mémorisé par la station mobile (MS) est interrogé par la station mobile (MS) lors d'un nouvel enregistrement de la station mobile (MS) par le serveur de réseau (NET) ou est transmis par la station mobile (MS) au serveur de réseau (NET) et
une communication (KOMM) intervient entre au moins deux stations mobiles (MS-A, MS-B) selon le tarif attribué à la zone de taxation spéciale (Z) indépendamment de leur localisation momentanée, dans la mesure où au moins l'une des stations mobiles (MS) communicantes a transmis un code de zones (ZK) au serveur de réseau (NET).

2. Procédé selon la revendication 1,
**caractérisé en ce qu'**un contrôle intervient au niveau d'une localisation des stations mobiles (MS) à l'intérieur de la zone de taxation spéciale (Z) par une comparaison des codes de cellules (CA, CB, ...) momentanés des stations mobiles (MS) avec un registre de zones (ZID-REG) géré par le serveur de réseau (NET) et définissant la zone de taxation spéciale (Z) par un aperçu des codes de cellules (C1...C14).

3. Procédé selon la revendication 2,
**caractérisé en ce que**,
lors d'une localisation constatée d'une station mobile (MS-A) lors d'un établissement de liaison activé à partir de celle-ci par le réseau de communication mobile avec une autre station mobile (MS-B) localisée à l'intérieur de la zone de taxation spéciale (Z), on a une confirmation (REPLY) de la part du serveur de réseau (NET) qui indique sa présence à l'intérieur de la zone de taxation spéciale (Z).

4. Procédé selon la revendication 3,
**caractérisé en ce que**
la confirmation (REPLY) est affichée sous forme optique et/ou acoustique sur au moins l'une des stations mobiles (MS-A, MS-B).

5. Procédé selon l'une quelconque des revendications précédentes,
**caractérisé en ce que**
l'information (MES) et/ou un avertissement (WARN) d'une sortie (LEAVE) de la zone distincte de taxation spéciale (Z) est effectuée par une station mobile (MS) d'un abonné d'une communication (KOMM) existante momentanément au moyen d'un signal optique et/ou acoustique et/ou d'un message écrit et/ou d'un message vocal destiné à au moins l'une des stations mobiles communicantes (MS-A) resp. (MS-B).

6. Procédé selon l'une quelconque des revendications précédentes,
**caractérisé en ce que**
lors d'une sortie (LEAVE) de la zone de taxation spéciale (Z) pendant une communication (KOMM) existante entre les stations mobiles (MS-A, MS-B), le tarif attribué à la zone de taxation spéciale (Z) est maintenu (HOLD) au moins jusqu'à la fin de la communication (KOMM) par le dispositif de taxation (BC).

7. Procédé selon l'une quelconque des revendications précédentes,
**caractérisé en ce que**
le code de zone (ZK) est pourvu d'une validité limitée dans le temps et/ou périodique.

8. Procédé selon l'une quelconque des revendications précédentes,
**caractérisé en ce que**
le code de zone (ZK) est prédéfini de façon fixe par la station mobile (MS) sans initialisation par une opération d'enregistrement.

9. Procédé selon l'une quelconque des revendications précédentes,
**caractérisé en ce que**
le code de zone (ZK) est mémorisé sur un module d'identification d'abonné (SIM) approprié à cet effet du côté de la station mobile (MS).
